# EUROPÄISCHE PATENTSCHRIFT

(11) **EP 0 643 788 B1**
(45) Veröffentlichungstag und Bekanntmachung des Hinweises auf die Patenterteilung: **06.03.1996**
(21) Anmeldenummer: 93911772.7
(22) Anmeldetag: 21.04.1993
(51) Int. Cl.: E03F 3/06, F16L 55/165

(54) **SYSTEM UND VERFAHREN ZUM RELINING VON KANALROHRABSCHNITTEN MIT KONTROLLMÖGLICHKEIT**
SYSTEM AND PROCESS FOR RELINING CHANNEL PIPE SECTIONS WITH INSPECTION FACILITIES
SYSTEME ET PROCEDE POUR RENOUVELER LE REVETEMENT DE SECTIONS DE CANALISATION AVEC POSSIBILITE DE CONTROLE

(30) Priorität: 21.04.1992 DE 4213068
(43) Veröffentlichungstag der Anmeldung: 22.03.1995
(73) Patentinhaber: HT TROPLAST AG, D-53839 Troisdorf (DE)
(72) Erfinder: SCHMAGER, Klaus, D-5207 Ruppichteroth-Winterscheid (DE)
(86) Internationale Anmeldenummer: EP9300973
(87) Internationale Veröffentlichungsnummer: WO9321398

(56) Entgegenhaltungen:
- EP-A- 0 184 366
- WO-A-88/03598
- WO-A-91/10862
- US-A- 4 421 698

## Beschreibung

Die Erfindung betrifft ein System und ein Verfahren zum Relining von Transportleitungen wie Kanalrohrleitungen bzw. -abschnitten mit Kontrollmöglichkeit.

Relining ist ein Verfahren zum Sanieren beschädigter, im allgemeinen unterirdischer Transportleitungen durch Einbringen eines neuen Innenrohrstranges o. dgl. in die beschädigte vorhandene Leitung.

Bei einem bekannten Relining-Verfahren wird ein langer Rohrstrang aus zusammengeschweißten Kunststoffrohren, z. B. aus Polyethylen, in den beschädigten Kanalabschnitt eingeschoben. Da die Rohre wenig flexibel sind, sind hierzu größere Baugruben erforderlich.

Bei dem sogenannten Kurzrohrrelining werden kurze Kunststoffrohre einer Länge von ca. 0,5 bis max. 1 m in vorhandenen Standard-Kanalschächten zusammengesteckt und von diesem Kanalschacht aus in den zu sanierenden Kanalabschnitt eingeschoben oder eingezogen (DE-A 34 13 294).

Es ist schon vorgeschlagen worden (DE-A 27 04 438), Kanalrohre dadurch zu sanieren, daß in das Innere des Abflußrohres eine flexible Rohrleitung eingeführt wird, deren Außendurchmesser kleiner als der Innendurchmesser des Abflußrohres ist, wobei die flexible Rohrleitung mit Abstand zum Abflußrohr unter Bildung eines Ringraumes angeordnet wird. Bei diesem Verfahren wird dieser Ringraum mit einer aushärtbaren Verfüllmasse niedriger Viskosität ausgefüllt, wobei als Verfüllmasse beispielsweise Magnesiumzement verwendet wird.

In der DE-A1 39 30 984 wird ein Verfahren vorgeschlagen, bei dem ein Auskleidungsschlauch (Inliner) aus Weich-PVC eingesetzt wird, der auf seiner Außenseite eine starkfädrige Wirrfaserschicht aus Polyamid als Abstandshalter aufweist. In den durch die Wirrfaserschicht freigehaltenen Ringraum zwischen dem zu sanierenden Kanalrohr und dem eigentlichen Inliner wird ein schnellhärtender Mörtel (sog. Dämmer) eingebracht und ausgehärtet. Ein ähnliches Verfahren wird in der DE-A1 39 34 980 vorgeschlagen, wobei als Material für den Inliner auch HDPE (Polyethylen hoher Dichte) vorgesehen ist.

Aus dem "Sonderdruck aus bbr 5/90; U-Liners; Protokoll einer Sanierung, Imbema Rohrsanierungs GmbH" ist ein Verfahren zum Relining von Abwasserkanälen bekannt, bei dem zunächst ein endloses steifes HDPE-Rohr unter starker Erwärmung fabrikmäßig zu einem U-förmigen Querschnitt gefaltet und dieser deformierte Querschnitt mit Bändern fixiert wird. Dieses immer noch recht steife Gebilde wird anschließend in den Kanai eingezogen und mit Wasserdampf unter erhöhtem Druck (ca. 1,3 bar) bis in den thermoplastischen Zustand erwärmt, wobei das HDPE-Rohr wieder seinen ursprünglich runden Querschnitt einnimmt.

Aus der DE-U 90 12 003, der WO 91/10862 sowie dem Firmenprospekt "Steuler Umwelttechnik, Bekaplast für Kanalrohre, 1989" ist schließlich eine Noppen-Abdichtungsbahn zum Relining von Abwasserrohren bekannt. Dieser steife Inliner aus HDPE ist jedoch nur zum nachträglichen Sanieren von begehbaren Kanalrohren mit größerem Durchmesser verwendbar.

Aus der DE-C 23 62 784 ist ein System bekannt, bei dem ein einseitig mit Kunststoff beschichteter Vliesschlauch mit Harz und Härter vorab so getränkt wird, daß er nach dem Einbringen in die zu sanierende Rohrleitung im Umstülpverfahren und nach Anpressung an die Rohrwandung mittels Wasserdruck durch Erwärmung des Systems aushärtet und so ein neues Leitungssystem mit steifer Rohrwandung darstellt. Da das Harz-Härter-System im Trägervlies nur eine begrenzte Verarbeitungszeit (Topfzeit) hat, muß die Tränkung, der Transport zur Baustelle (evtl. im Kühlwagen) und das Einbringen innerhalb einer relativ kurzen Zeitspanne erfolgen. Für die Sanierung eines ganzen Rohrstranges ist dieses System mit harzimprägniertem Vlies eine anpassungsfähige Lösung.

Dieses Verfahren ist allerdings nur befriedigend anwendbar für zu sanierende Rohre, die keine größeren Risse oder Auskolkungen aufweisen, da durch diese das Harz vor der Aushärtung austreten könnte oder da sonst das neue Fließgerinne zu große Unebenheiten aufweisen würde. Bei einem ähnlichen Verfahren (EP-A1 0 260 341) wird dieser Nachteil dadurch vermieden, daß zunächst ein äußerer harzgetränkter Vliesschlauch in den zu sanierenden Kanal eingezogen wird, wonach ein innerer ebenfalls harzgetränkter Kalibrierschlauch im Umstülpverfahren in den äußeren Vliesschlauch eingebracht wird. Nach Aushärtung des Harzes entsteht ein starres neues Rohr, das keine Verbindung mehr zum zu sanierenden alten Rohr aufweist. Durch die Verwendung von zwei harzgetränkten Vliesschläuchen ist dieses Verfahren allerdings sehr aufwendig und teuer.

Trotz der Vielzahl von Lösungsvorschlägen zum Relining von defekten Kanalrohren fehlt es bislang an einem überzeugenden System und Verfahren, das eine leichte Kontrollierbarkeit der Sanierung und des Inliners ermöglicht.

Aufgabe der Erfindung ist es, ein System und ein Verfahren zur Verfügung zu stellen, das diese Anforderungen erfüllt.

Die Erfindung löst diese Aufgabe durch ein System zum Relining von Transportleitungen nach Anspruch 1 oder 2 bzw. durch ein Verfahren nach einem der Ansprüche 4 oder 5, bevorzugt in Verbindung mit einem oder mehreren der Merkmale der Unteransprüche.

Soweit das gesamte System aus insgesamt zwei Inlinern besteht, weist entweder der äußere Inliner (Preliner) auf seiner Innenseite oder der innere Inliner auf seiner Außenseite Abstandshalter auf, die z. B. in Form von Rippen oder einer starkfädrigen Wirrfaserschicht entsprechend der DE-A1 39 30 984 ausgeführt sein können. Bevorzugt werden die Abstandshalter jedoch aus einer Vielzahl aus Noppen gebildet, die bevorzugt 0,5 - 2 mm hoch sind mit einem Durchmesser von 3 - 30 mm und einem mittleren Abstand von 3 - 40 mm. Die Abmessungen dieser Noppen sind unkritisch, da sie lediglich zur Aufrechterhaltung eines freien Fließquerschnitts dienen. Soweit die Abstandshalter auf der Außenseite des inneren Inliners angebracht sind, kann der äußere Inliner (Preliner) im einfachsten Fall aus einem beidseitig glatten Abdichtungsschlauch bestehen.

Als innerer Inliner, der nach dem Einbringen in den äußeren Inliner (Preliner) ein eigensteifes Rohr bildet, können die nach dem Stand der Technik bekannten Systeme wie Kurzrohrrelining, U-Liner-Verfahren, Softlining oder Einbringen eines endlosen, erwärmten HDPE-Rohres etc. verwendet werden.

Bevorzugt wird jedoch ein System mit insgesamt (wenigstens) drei Inlinern verwendet. Hierzu wird z. B. nach dem Einziehen des äußeren Inliners (Preliners) ein mittlerer Inliner in den Preliner eingezogen, wobei entweder der mittlere Inliner auf seiner Außenseite oder der Preliner auf seiner Innenseite flache Noppen als Abstandshalter aufweist. Die Erfindung umfaßt aber auch solche Ausführungsformen, bei denen der Abstand zwischen mittlerem und äußerem Inliner bzw. inneren und äußeren Inliner durch eine zusätzliche Schicht aus z. B. einem flüssigkeitsdurchlässigem Vlies etc. gebildet wird.

Nach einer bevorzugten Ausführungsform der Erfindung werden in den mittleren Inliner in an sich bekannter Weise ein weiterer Inliner durch Einziehen oder im Umstülpverfahren eingebracht, wobei dieser innere Inliner nach einer ersten Ausführungsform der Erfindung im eingebrachten Zustand auf seiner Außenseite eine harzgetränkte Vliesschicht aufweist. Durch Einfüllen eines Fluids wie Wasser oder Luft wird der Inliner anschließend aufgeblasen bzw. aufgestellt und ggf. an die Kanalwandung angepreßt, wobei die Harzschicht aushärtet und mit dem inneren Inliner ein eigensteifes inneres Rohr bildet. Alternativ ist es auch möglich, daß der mittlere Inliner auf seiner (späteren) Innenseite und der innere Inliner auf seiner (späteren) Außenseite jeweils ein harzgetränktes Vlies aufweisen, wobei die Harztränkungen z. B. miteinander reagieren und aushärten.

Nach einer weiteren besonders bevorzugten Ausführungsform der Erfindung weist der innere Inliner auf seiner Außenseite Mittel, z. B. Noppen, auf, die sowohl zur Fixierung eines definierten Abstandes (Ringraum) zwischen dem inneren und dem mittleren Inliner als auch zur formschlüssigen Verankerung des inneren Inliners in einer in den Ringraum zwischen dem inneren und dem zweiten Inliner einzubringenden aushärtbaren Masse, z. B. Mörtel, dient. Diese Ausführungsform der Erfindung wird nachstehend näher erläutert.

Der innere schlauchförmige thermoplastische Inliner weist dabei bevorzugt eine Wanddicke von 1,5 bis 5 mm auf, wobei bei zu sanierenden Kanälen mit größerem Nenndurchmesser (DN z. B. > 1000 mm) auch größere Wandstärken verwendet werden können. Entsprechend können bei kleinen Durchmessern der zu sanierenden Kanäle (DN z. B. 150 mm) geringere Wandstärken gewählt werden.

Die Noppen auf der Außenseite des inneren schlauchförmigen thermoplastischen Inliners weisen bevorzugt einen Durchmesser von 5 bis 15 mm und eine Länge von 8 bis 20 mm auf und besitzen am Kopfende einen größeren Durchmesser als am Fuß, um eine Hinterschneidung zu erzielen. Grundsätzlich sind diese Noppenformen bekannt. Der Abstand der einzelnen Noppen beträgt etwa 1,5 bis 4 cm voneinander, so daß auf 1 m etwa 500 bis 5000 Noppen kommen.

Die Noppen dienen zum einen als Abstandshalter zum mittleren Inliner, so daß nach dem Einbringen des inneren Inliners in den mittleren Inliner ein Ringraum zwischen dem mittleren Inliner und dem inneren Inliner freigehalten wird. In diesen Ringraum ragen dann die einzelnen Noppen. Der Ringraum wird mit einer aushärtbaren Masse, z. B. einem Kunstharz, ausgefüllt. Die Masse wird anschließend ausgehärtet. Bevorzugt wird als aushärtbare Masse ein dünnflüssiger Mörtel (Dämmer) verwendet.

Nach dem Ausfüllen und Aushärten dieses Ringraumes mit z. B. einem Mörtel bilden die Noppen mit ihren Hinterschneidungen gleichzeitig Verankerungselemente, die den Inliner an dem ausgehärteten Mörtel befestigen. Der mittlere und der innere Inliner und der ausgehärtete Mörtel (Dämmer) bilden dabei ein starres (neues) Rohr, das von außen durch den mittleren Inliner isoliert und von innen mit dem inneren Inliner ausgekleidet ist.

Bei dem Vermörteln wird der Ringraum zwischen dem mittleren und dem inneren Inliner vollständig mit dem dünnflüssigen Mörtel ausgefüllt. Ggf. kann durch Temperieren des Fluids im Inneren des Inliners die Aushärtung des Mörtels verzögert oder beschleunigt werden. Durch die Verwendung eines hochfesten Mörtels bildet der verfüllte Ringraum eine tragende Schale und gewährleistet somit gleichzeitig die Statik des Inliners. Bereits nach 12 h Aushärtezeit werden bei einer Nennweite DN 800 alle Spannungsnachweise, die an selbsttragende Auskleidungen gemäß IfBT ("Richtlinie für Auswahl und Anwendung von Innenauskleidungen mit Kunststoffbauteilen für Misch- und Schmutzwasserkanäle, Anforderungen und Prüfungen, 09.82") und ATV A 127 ("Richtlinie für die statische Berechnung um Entwässerungskanälen und Leitungen") gestellt werden, erfüllt.

Soweit an die sanierte Rohrleitung besonders hohe mechanische Anforderungen (Statik) gestellt werden, können auch zwei auf der Außenseite mit Noppen versehene innere Inliner verwendet werden, wobei beide entstehenden Ringräume mit z. B. Mörtel ausgefüllt werden.

Zur Herstellung der schlauchförmigen noppenbesetzten Inliner wird eine Bahn aus entsprechendem thermoplastischem Kunststoff in an sich bekannter Weise zu einem Schlauch geformt, wobei ein Seitenstreifen von z. B. 3 bis 10 cm Breite, bevorzugt etwa 4,5 cm Breite, von dem hierzu parailelen anderen Seitenstreifen überlappt wird. Im Überlappungsbereich werden die Seitenstreifen - bevorzugt mit einer Doppelnaht - thermisch verschweißt. Der zwischen den Doppelnähten gebildete Prüfkanal dient zur Dichtigkeitsprüfung der Schweißnähte. Die Schweißnaht verläuft dabei etwa parallel zur Längsachse des Inliners.

Besonders vorteilhaft ist es, wenn im Bereich der Doppelnaht zwischen den beiden Nähten wenigstens eine Reihe von Noppen angeordnet ist. Die Anzahl der Noppen (Abstandshalter bzw. Verankerungselemente) je m sollte im Bereich der Naht etwa derjenigen im Bereich der übrigen Bahn entsprechen. Hierzu sind die Noppen in ggf. versetzt zueinander stehenden Reihen parallel zueinander und zur Längserstreckung der Bahn angeordnet, wobei zwischen je zwei benachbarten Noppenreihen ein für eine Schweißnaht ausreichend breiter Zwischenraum von ca. 0,5 bis 2 cm freibleibt. Dabei können für größere Durchmesser des zu sanierenden Rohres ggf. auch mehrere Noppenbahnen zu einem Inliner größeren Durchmessers miteinander verbunden werden.

Nach diesen Verfahren können die Inliner für verschiedene Kanaldurchmesser im Bedarfsfall quasi maßgeschneidert werden. Der äußere Inliner (Preliner) weist dabei einen Außenumfang auf, der etwa dem Innenumfang des zu sanierenden Kanals entspricht. Entsprechend weist der mittlere Inliner einen Außenumfang auf, der etwa dem Innenumfang des äußeren Inliners (Preliners) entspricht. Entsprechendes gilt für den inneren Inliner.

Selbst für den äußerst unwahrscheinlichen Fall, daß sowohl der äußere Inliner (Preliner) als auch der mittlere Inliner später beschädigt werden und danach von außen Wasser durch die Mörtelschicht dringen kann, wird der relativ flexible innere Inliner dabei nicht eingedrückt, d. h. er beuit nicht ein, da die Noppen von dem ausgehärteten Mörtel gehalten werden. Je nach Noppengeometrie können dabei Außendrücke von bis zu 3 bar bewältigt werden, bevor die Noppen aus der Rohrschale gezogen werden.

Letztlich ist es für die Funktion der vorliegenden Erfindung nicht erheblich, auf welche Weise das eigensteife innere Rohr gebildet wird, soweit zwischen diesem und dem äußeren Preliner ein offener Fließquerschnitt ais Kontrollraum zur Feststellung und ggf. Beseitigung von Undichtigkeiten freigehalten wird.

Mit Hilfe dieses freien Fließquerschnitts bzw. Kontrollraums kann nach der Sanierung oder auch später durch an sich bekannte Maßnahmen wie Anlegen eines Über- oder Unterdrucks, Absaugen oder Auffangen von in den Prüfraum eingedrungener Flüssigkeit mit einem dünnen Prüfschlauch, Messung des elektrischen Widerstandes durch eine Prüfsonde etc. eine Leckage festgestellt werden. Ggf. kann eine so geortete Leckage auch in an sich bekannter Weise durch Injektion eines aushärtenden und/oder quellfähigen Mittels in den Kontroll-Ringraum abgedichtet werden.

Nach einer weiteren bevorzugten Ausführungsform der Erfindung ist in einem der verwendeten Inliner (äußerer Inliner (Preliner), mittlerer Inliner, innerer Inliner) eine Metallfolie, z. B. aus Aluminium, eingebettet. Diese Sperrfolie dient als zuverlässige Sperre gegen Permeation bzw. Diffusion von chlorierten Kohlenwasserstoffen etc., die das thermoplastische Material der Inliner durchdringen können. Bevorzugt wird die Sperrfolie in den mittleren Inliner integriert.

Nach einer bevorzugten Ausführung der Erfindung wird dem Kunststoff für den inneren Inliner ein hellfarbiges Pigment beigemischt, um einen Inliner mit heller Farbe zu erhalten. Als Maß für den "Helligkeitsgrad" bzw. "globalen Refexionsgrad" wird bei einer mattierten Probe nach DIN 5033, Teil 4 (Spektralverfahren, Lichtart C, 2° Beobachtungswinkel, Geometrie 0°/45°) der sog. L-Wert bestimmt. Ein L-Wert von 100 bedeutet, daß 100 % des auftreffenden Lichtes (diffus) reflektiert werden (ideales Weiß). Der erfindungsgemäße Inliner weist hiernach bevorzugt einen globalen Reflexionsgrad von > 30%, bevorzugt > 60 % (L-Wert > 30 bzw. > 60) auf. Hierdurch wird eine spätere Kontrolle des sanierten Kanals mit einer Videokamera wesentlich erleichtert.

Nach einer alternativen Ausführung der Erfindung werden dem thermoplastischen Kunststoff für den inneren Inliner keine Farbpigmente und kein Ruß beigemischt, um einen transparenten oder transluzenten Inliner zu erhalten. Als Maß für die "globale Lichtdurchlässigkeit" wird gemessen, welcher Anteil des senkrecht auftreffenden Lichts (380 - 780 nm) die Probe durchdringt (einschließlich des gestreuten Anteils). Die globaie Lichtdurchlässigkeit des Inliners nach dieser Ausführungsform der Erfindung beträgt > 30 %, bevorzugt > 50 %. Hierdurch wird eine spätere Kontrolle des den Inliner umgebenden Mörtels, z. B. auf Vorhandensein größerer Lunker, Luftblasen oder Risse, ermöglicht.

Grundsätzlich können die erfindungsgemäßen Inliner bei genügend hoher Flexibilität nach dem sogenannten Umstülpverfahren in den zu sanierenden Kanalabschnitt eingebracht werden. Bevorzugt werden die Inliner jedoch von einem im allgemeinen bereits vorhandenen Kanalschacht (Standard-Schachtbauwerk) bis zum nächsten vorhandenen Kanalschacht gezogen, wobei auch Zwischenschächte überbrückt werden können. Hierzu kann der Inliner etwa U- oder S-förmig gefaltet und schlaff auch über relativ kleine Biegeradien gezogen werden.

Bevorzugt werden die werksseitig vorkonfektionierten Inliner auf einer Trommel am Schachtbauwerk aufgeständert. Durch eine über der Einsteigöffnung positionierte Verformungseinheit wird der Inliner während des Einziehvorganges etwa U-förmig gefaltet, so daß sich gegenüber dem Originalzustand eine Querschnittsreduzierung von ca. 50 % mit entsprechendem Steifigkeitsverlust ergibt. Diese ermöglicht es, bequem innerhalb des Schachtbauwerkes, z. B. mit Hilfe eines eingebrachten Rohrbogens aus PE, den Inliner um 90° umzulenken und in die Kanalhaltung einzuführen. Vom jeweiligen Endschacht der zu sanierenden Haltung aus werden die einzelnen Inliner nun ebenfalls über eine Umlenkvorrichtung eingezogen.

Von besonderem Vorteil ist es dabei, daß die Inliner vor dem Einziehen in die Kanalrohrleitung nicht erwärmt zu werden brauchen, d. h., daß sie bei Umgebungstemperatur eingebracht werden können.

Bei der bevorzugten Ausführungsform der Erfindung wird zunächst der äußere Inliner (Preliner) in den zu sanierenden Kanal eingezogen. Soweit dabei der äußere Inliner (Preliner) Noppen aufweist, werden diese nach innen angeordnet. Anschließend wird der mittlere Inliner, ggf. mit den Noppen nach außen, in den äußeren Inliner, und danach der innere, auf seiner Außenseite mit Noppen versehene Inliner in den mittleren Inliner eingezogen.

Auf diese Weise entsteht ein dreischaliges System von Inlinern, das selbstverständlich bei Bedarf mit weiteren Schichten (Inlinern) ergänzt werden kann, soweit die damit verbundene Querschnittsreduzierung in Kauf genommen werden kann.

Nach Möglichkeit sollten die Schweißnähte jeweils im Scheitelbereich des Kanalrohres angeordnet werden.

Das erfindungsgemäße Relining-System vereint in bisher nicht bekanntem Maße z. T. so widersprüchliche Eigenschaften wie:
- hohe Flexibilität zum leichteren Einbringen des Inliners durch vorhandene Schachtbauwerke,
- hohe Chemikalienbeständigkeit gegen aggressive Medien,
- absolute Dichtigkeit gegen Exfiltration und Infiltration,
- hohe Eigenstabilität und mechanische Festigkeit, z. B. bei mechanischer Beanspruchung von außen (Erdbewegungen) und späterer Hochdruck-Wasserstrahl-Reinigung von innen,
- lange Betriebsdauer,
- Verwendbarkeit auch bei nicht begehbaren Kanalrohrleitungen,
- Verwendbarkeit auch bei unrunden Kanalquerschnitten, bei Rohrbögen etc. sowie bei stark beschädigten Kanälen mit Wassereinbruch von außen,
- geringer Energieverbrauch und Aufwand beim Verlegen,
- geringer Querschnittsverlust,
- Inkrustationssicherheit,
- günstige Kosten,
- Kontrollierbarkeit der Dichtigkeit sowie
- Sanierbarkeit.

Die Erfindung wird nachfolgend anhand eines Ausführungsbeispiels sowie der Zeichnungen näher erläutert.

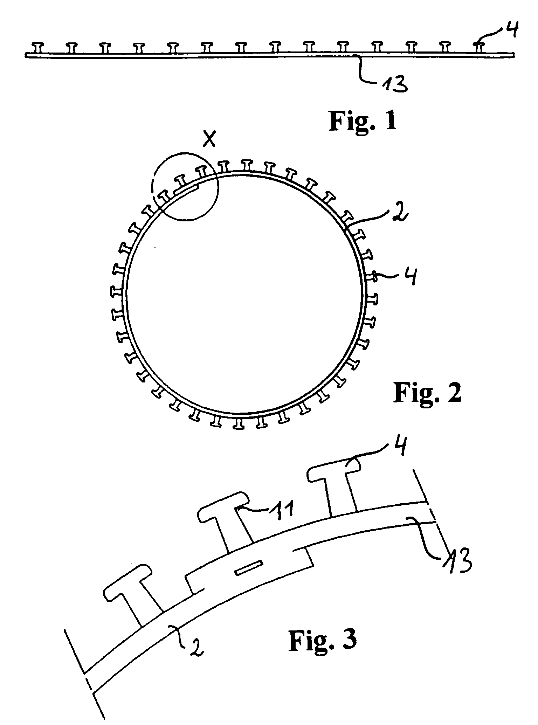

Es zeigen dabei
- Fig. 1: eine Noppenbahn zur Herstellung des inneren Inliners;
- Fig. 2: den inneren Inliner nach dem Verschweißen;
- Fig. 3: Einzelheit X gemäß Fig. 2 (Schweißnaht);
- Fig. 4: einen Längsschnitt eines zu sanierenden Kanals beim Einziehen des Preliners;
- Fig. 5: einen Längsschnitt durch einen zu sanierenden Kanal bei der Ringraumverfüllung (schematisch) ;
- Fig. 6: einen Querschnitt durch einen sanierten Kanal (Alternativausführung);
- Fig. 7 einen Querschnitt durch den sanierten Kanal (Einzelheit Y gemäß Fig. 8 nach der Ringraumverfüllung);
- Fig. 8: einen Querschnitt durch den zu sanierenden Kanal vor der Ringraumverfüllung;
- Fig. 9: den Anschluß des Inliners am Kanalende.

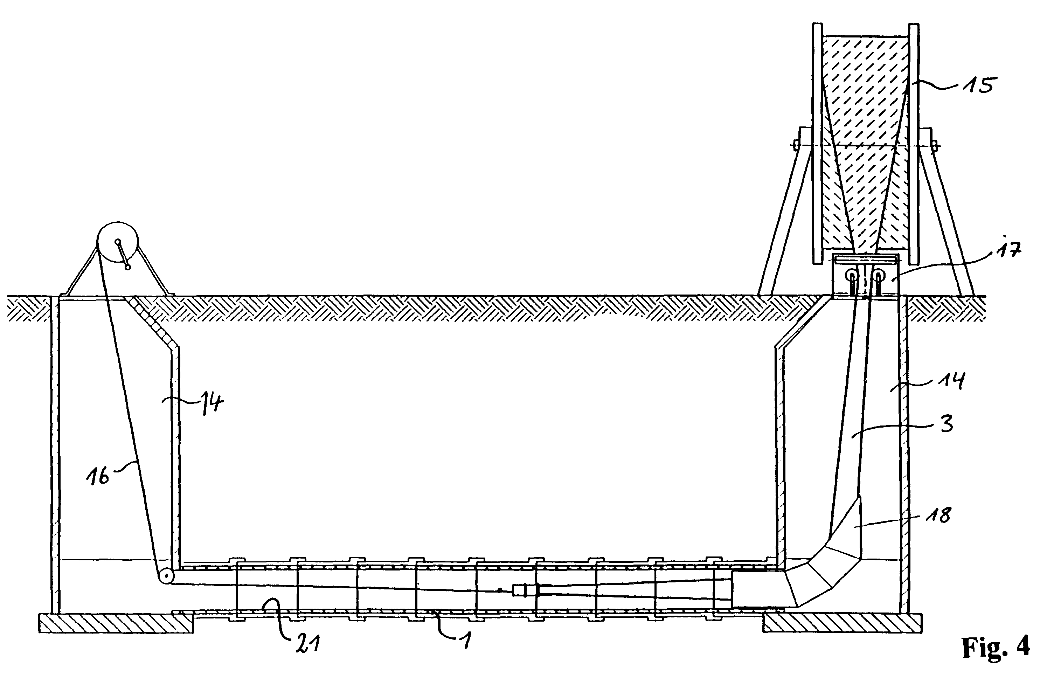

Ein Kanal 1 mit Nenndurchmesser 300 mm (DN 300) soll saniert werden. Der Kanal 1 weist im Abstand von je 60 m Standard-Schachtbauwerke 14 auf (Fig. 4).

Zur Herstellung des Preliners 7 wird ein Ansatz bestehend aus

| | | |
|---|---|---|
| 97 | Gew.-% HDPE | (Vestolen ® A 3512 Natur; Fa. Hüls AG; E-Modul 590 N/mm) |
| 2 | Gew.-% | (Weißpigment PMM 869, Fa. Polyplast Müller) |
| 1 | Gew.-% HDPE | (Vestolen ® A 3515 R, Fa. Hüls AG; rußhaltig) |

in einem dem Fachmann bekannten Einschneckenextruder homogenisiert und als Flachfolie einer Breite von ca. 1 m und einer mittleren Dicke von 2,5 mm auf ein Walzwerk aufextrudiert. Das Walzwerk besteht aus einer ersten Walze, die flache runde Vertiefungen aufweist, und einer zweiten glatten Walze. In dem Walzenspalt wird das thermoplastische Material in die flachen Vertiefungen eingedrückt. Nach Abziehen der Bahn von der Walze erhält man eine mit Noppen 8 einer Höhe von 1 mm und einem Durchmesser von 8 mm versehene Abdichtungsbahn. Nach beidseitiger Besäumung der Bahn auf 985 mm Breite wird diese in einem zweiten Arbeitsschritt zu dem Preliner 7 mit einem äußeren Durchmesser von 300 mm geformt, wobei im Überlappungsbereich durch thermisches Verschweißen eine Doppelnaht mit dazwischenliegendem Prüfkanal erzeugt wird.

Für den mittleren Inliner 3 wird eine dreischichtige Abdichtungsbahn aus HDPE mit innenliegender Aluminiumfolie 10 als Permeationssperre verwendet. Die Verschweißung zu dem mittleren Inliner 3 erfolgt wie bei dem äußeren Inliner (Preliner 7).

Zur Herstellung des inneren Inliners 2 wird reines HDPE (Vestolen ^{®} A 3512 Natur; Fa. Hüls AG; E-Modul: 590 N/mm) verwendet.

Dieser Ansatz wird in einem Einschneckenextruder homogenisiert und auf ein Walzwerk mit einer ersten Walze, die leicht konische Bohrungen aufweist, und einer zweiten Walze aufextrudiert. In dem Walzenspalt wird das thermoplastische Material in die leicht konischen Bohrungen eingedrückt. Nach Abziehen der Bahn von der Walze erhält man eine mit Noppen versehene Abdichtungsbahn 13. Die Noppen mit einer anfänglichen Länge von 13 mm werden anschließend mit Hilfe eines zweiten Walzwerkes mit einer Stahlwalze und einer Gummiwalze mit einer Spaltweite von 12 mm am Kopf gestaucht, so daß die einzelnen, auf eine Länge von ca. 10 mm gestauchten Noppen 4 entsprechende Hinterschneidungen 11 aufweisen. Im dargestellten Ausführungsbeispiel ist die Abdichtungsbahn 13 3 mm dick. Die Noppen 4 haben eine Länge von 10 mm, einen Durchmesser am Fuß von 5 mm und am Kopf von 8 mm.

Der transluzente (opake) innere Inliner 2 weist eine globale Lichtdurchlässigkeit von 53 % auf.

Preliner 7, mittlerer Inliner 3 und innerer Inliner 2 werden auf eine Länge von jeweils ca. 60 m abgelängt, auf Dichtigkeit geprüft und auf einer Kabeltrommei an die Baustelle transportiert. In Fig. 4 ist das Einziehen des Preliners 7 in den zu sanierenden Kanal 1 näher dargestellt. Der Preliner 7 wird dabei von dem Standard-Schachtbauwerk 14 in den Kanal 1 eingezogen. Hierzu wird mit Hilfe der Vorrichtung 15 der Preliner 7 zunächst etwa U-förmig gefaltet und mit Hilfe des Seiles 16 über die Rollenführung 17 und die Umlenkeinrichtung 18 in den Kanal 1 gefädelt.

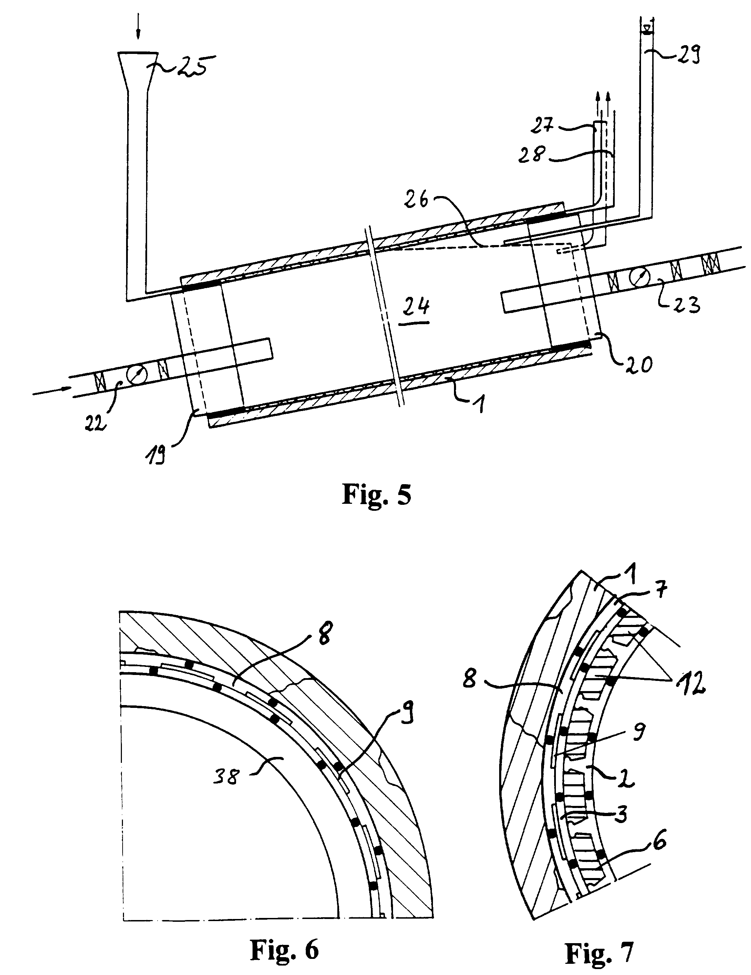

Nach dem Einziehen des Preliners 7 werden der mittlere Inliner 3 und der innere Inliner 2 in gleicher Weise in den Preliner 7 eingezogen (Fig. 4). Anschließend werden an beiden Enden des inneren Inliners 2 auf einer Länge von 10 cm die Noppen 4 entfernt. Diese noppenfreien Enden 31 des Inliners 2 werden an beiden Enden mit Hilfe von Absperrblasen 19 und 20 an die Kanalinnenwandung 21 angepreßt und in diesem Bereich abgedichtet (Fig.5). Einfüllöffnungen 22 und Ablaßöffnungen 23 ermöglichen das Einfüllen und Abführen von (ggf. temperiertem) Wasser 24 unter definiertem Druck. Gleichzeitig kann durch Messung eines evtl. Druckabfalls eine Undichtigkeit rechtzeitig festgestellt werden. Durch den Wasser-Innendruck von ca. 0,5 bar wird der innere Inliner 2 an den mittleren Inliner 3, dieser an den Preliner 7 und dieser an die Innenwandung 21 des Kanals 1 angepreßt, wobei die Noppen 4 einen definierten Ringraum 5 zwischen der Abdichtungsbahn 13 und dem mittleren Inliner 7 fixieren. In diesen Ringraum 5 wird durch den Einfülltrichter 25 ein dünnflüssiger Mörtel 6 (Fabrikat HC/HT Relining-Injektor, Firma Hüls Troisdorf AG) eingefüllt. Im dargestellten Beispiel wird der Mörtel 6 vom Scheitelpunkt der tiefsten Stelle der Kanalhaltung aus mit geringem Druck eingefüllt, wobei sich der Mörtel 6 durch die Schwerkraft in dem Ringraum 5 des leicht ansteigenden Kanals 1 entsprechend verteilt. In Fig. 5 ist der momentan erreichte Mörtel-Spiegel 26 eingezeichnet. Ggf. kann durch Entlüftungsieitungen 27 und 28 Luft aus dem Ringraum 5 entweichen, wobei gleichzeitig eine Kontrolle des erreichten Mörtel-Spiegels 26 ermoglicht wird. Beim Einfüllen des Mörtels 6 kann der Innendruck im inneren Inliner 2 u. U. ansteigen, was mit Hilfe des Überlaufs 29 kontrolliert und ausgeglichen werden kann.

Nach vollständiger Vermörtelung härtet der Mörtel 6 innerhalb von ca. 7 h aus, wobei die Härtezeit ggf. durch Temperieren des Wassers 24 beschleunigt oder verlangsamt werden kann.

Nach Aushärtung bildet der Mörtel 6 ein starres selbsttragendes Rohr, das innen durch den inneren Inliner 2 und von außen durch den mittleren Inliner 3 gegen Korrosion zuverlässig geschützt ist. Die Noppen 4 stellen dabei eine Verankerung der Noppenbahn in dem Mörtelrohr dar (Fig. 7).

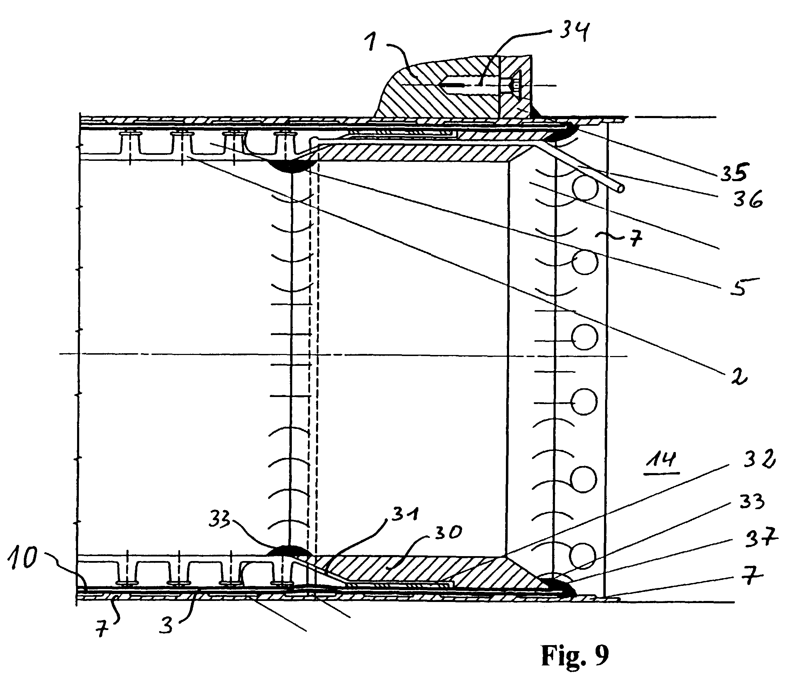

Abschließend wird der Inliner 2 an beiden Enden, wie in Fig. 9 dargestellt, an die Schachtbauwerke 14 angeschlossen. Hierzu wird ein statisch selbsttragender, steifer Ring 30 aus HDPE von den Schachtbauwerken 14 aus in das Kanalende eingeschoben, wobei die noppenfreien Enden 31 des Inliners 2 zusammen mit dem Ende des mittleren Inliners 3 und dem Ende des Preliners 7 zwischen dem HDPE-Ring 30 und der Kanalinnenwandung 21 eingeklemmt werden. Weiterhin ist ein Kontrollschlauch 36 als Zugang zu dem Kontrollraum 9 zwischen dem äußeren Inliner 7 und mittleren Inliner 3 vorgesehen. Wie in Fig. 9 dargestellt, wird zusätzlich am Inlinerende, d. h. am Schachtbauwerk 14, der mittlere Inliner 3 mit dem äußeren Inliner 7 verschweißt (Schweißnaht 37). Als weitere Abdichtung zwischen den Inliner-Enden 31 und dem mittleren Inliner 3 dient ein Dichtungsband 32 aus Butyl-Kautschuk (doppelseitiges Klebeband). Nach dem Einbringen der HDPE-Ringe 30 werden diese mit dem Inliner 2 verschweißt (Schweißnaht 33). Eine von dem Schachtbauwerk 14 von innen mit Dübeln 34 an der oberen Hälfte des Kanalrohres 1 befestigte halbkreis-bogenförmige Platte 35 aus HDPE wird abschließend mit dem Ring 30 verschweißt.

Durch die Verwendung eines nahezu transparenten Inliners 2 ist eine zuverlässige TV-Kontrolle des mit Mörtel 6 verfüllten Ringraumes 5 möglich, so daß z. B. größere Luftblasen rechtzeitig entdeckt werden können.

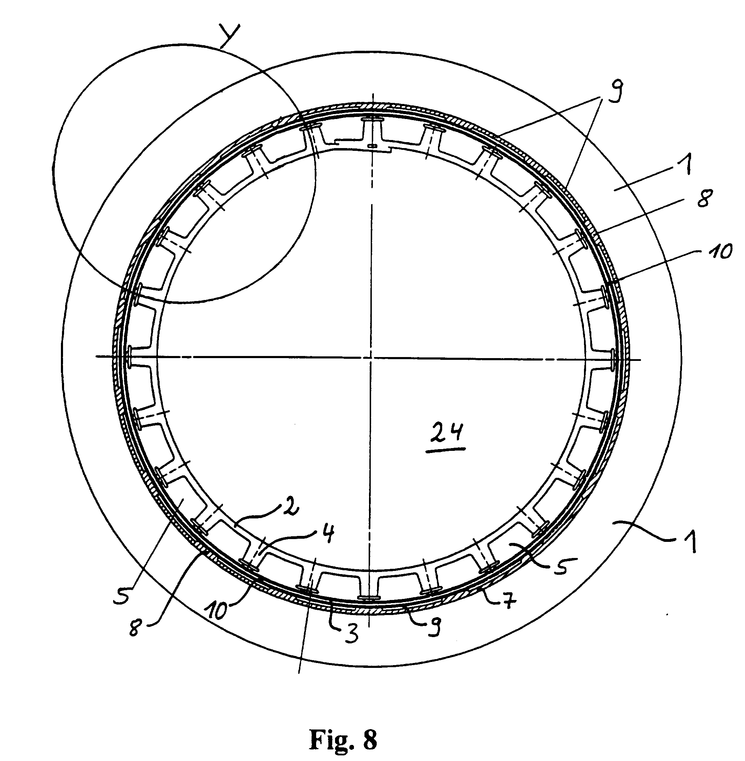

In den Fig. 8 und 7 ist ein Querschnitt eines entsprechend sanierten Rohres dargestellt. Zwischen dem äußeren Inliner (Preliner 7) und dem mittleren Inliner 3 wird ein Kontrollraum 9 (äußerer Ringraum) durch die Noppen 8 fixiert.

In Fig. 6 ist eine alternative Ausführungsform der Erfindung dargestellt, bei der das innere Rohr 38 von einem harzgetränkten Vliesschlauch gebildet wird.

## Patentansprüche

1. System zum Relining von Transportleitungen wie Kanalrohrleitungen (1) mit einem inneren Inliner (2) und einem äußeren Inliner (Preliner 7),
- wobei der Innere Inliner (2) nach dem Einbringen in den äußeren Inliner (Preliner 7) ein eigensteifes inneres Rohr (38) bildet und
- wobei der äußere Inliner (Preliner 7) so im Abstand zu dem inneren Inliner (2) angeordnet ist, daß ein offener Fließquerschnitt zwischen dem inneren und dem äußeren Inliner gebildet wird als Kontrollraum (9) zur Feststellung und ggf. Beseitigung von Undichtigkeiten in einem der Inliner.

2. System zum Relining von Transportleitungen wie Kanalrohrleitungen (1) mit einem inneren Inliner (2), einem mittleren Inliner (3) und einem äußeren Inliner (Preliner 7),
- wobei der innere Inliner (2) zusammen mit dem mittleren Inliner (3) nach dem Einbringen in den äußeren Inliner ein eigensteifes inneres Rohr (38) bildet und
- wobei der äußere Inliner (Preliner 7) so im Abstand zu dem mittleren Inliner (3) angeordnet ist, daß ein offener Fließquerschnitt zwischen dem mittleren und äußeren Inliner gebildet wird als Kontrollraum (9) zur Feststellung und ggf. Beseitigung von Undichtigkeiten in einem der Inliner.

3. System nach einem der Ansprüche 1 oder 2, ***dadurch gekennzeichnet****,* daß der Abstand zwischen dem äußeren Inliner (Preliner 7) und dem mittleren bzw. inneren Inliner durch Noppen (8) auf der Innenseite des äußeren oder auf der Außenseite des mittleren bzw. inneren Inliners fixiert wird.

4. Verfahren zum Relining von Transportleitungen wie Kanalrohrleitungen (1) mit einem inneren Inliner (2) und einem äußeren Inliner (Preliner 7),
- wobei der innere Inliner (2) nach dem Einbringen in den äußeren Inliner ein eigensteifes inneres Rohr (38) bildet und
- wobei der äußere Inliner (Preliner 7) so im Abstand zu dem inneren Inliner (2) angeordnet wird, daß ein offener Fließquerschnitt zwischen dem inneren und dem äußeren Inliner gebildet wird als Kontrollraum (9) zur Feststellung und ggf. Beseitigung von Undichtigkeiten in einem der Inliner.

5. Verfahren nach Anspruch 4, ***dadurch gekennzeichnet****,* daß der innere Inliner (2) aus thermoplastischem Kunststoff besteht und vor oder nach dem Einbringen in den äußeren Inliner (Preliner 7) durch Erwärmung erweicht wird.

6. Verfahren zum Relining von Transportleitungen wie Kanalrohrleitungen (1) mit einem inneren Inliner (2), einem mittleren Inliner (3) und einem äußeren Inliner (Preliner 7),
- wobei der innere Inliner (2) zusammen mit dem mittleren Inliner (3) nach dem Einbringen in den äußeren Inliner (Preliner 7) ein eigensteifes inneres Rohr (39) bildet und
- wobei der äußere Inliner (Preliner 7) so im Abstand zu dem mittleren Inliner (3) angeordnet wird, daß ein offener Fließquerschnitt zwischen dem mittleren und äußeren Inliner gebildet wird als Kontrollraum (9) zur Feststellung und ggf. Beseitigung von Undichtigkeiten in einem der Inliner.

7. Verfahren nach Anspruch 5, ***dadurch gekennzeichnet,*** daß als innerer Inliner (2) ein Schlauch verwendet wird, der auf seiner späteren Außenseite ein mit einem aushärtbaren Harz versehenes Vlies aufweist, das nach dem Einbringen in den mittleren Inliner (3) ausgehärtet wird.

8. Verfahren nach Anspruch 6, ***dadurch gekennzeichnet****,* daß der innere Inliner (2) auf seiner Außenseite Mittel (Noppen 4) zur Fixierung eines Abstandes zwischen dem mittleren und dem inneren Inliner aufweist, wodurch ein freier Ringraum (5) zwischen dem mittleren und inneren Inliner gebildet wird, und daß in diesen Ringraum (5) zwischen dem mittleren und dem inneren Inliner ein aushärtbares Medium (Mörtel 6) eingebracht und ausgehärtet wird.

9. Verfahren nach einem der Ansprüche 4 bis 8, ***dadurch gekennzeichnet****,* daß einer der verwendeten Inliner eine Metallfolie (10) als Diffusions- bzw. Permeationssperre für chlorierte Kohlenwasserstoffe aufweist.

10. Verfahren nach einem der Ansprüche 4 bis 9, ***dadurch gekennzeichnet****,* daß die verwendeten Inliner nacheinander durch vorhandene Schachtbauwerke (14) in die zu sanierende Kanalrohrleitung eingezogen werden.

## Claims

1. System for relining conveyor ducts such as pipelines (1) with an inner inliner (2) and an outer inliner (preliner 7),
- wherein, after insertion in the outer inliner (preliner 7), the inner inliner (2) forms an inherently rigid inner tube (38) and
- wherein the outer inliner (preliner 7) is so arranged with a clearance from the inner inliner (2) that an open flow cross-section between the inner and the outer inliners is formed as control chamber (9) for detecting and possibly eliminating leaks in one of the inliners.

2. System for the relining of conveyor ducts such as pipelines (1) with an inner inliner (2), an intermediate inliner (3) and an outer inliner (preliner 7),
- wherein the inner inliner (2) together with the intermediate inliner (3) forms an inherently rigid inner tube (38) after the insertion in the outer inliner and
- wherein the outer inliner (preliner 7) is so arranged with a clearance from the intermediate inliner (3) that an open flow cross-section between the intermediate and the outer inliners is formed as control chamber (9) for detecting and possibly eliminating leaks in one of the inliners.

3. System according to one of claims 1 or 2, **characterised in that** the distance between the outer liner (preliner 7) and the intermediate or inner inliner respectively is fixed by means of knobs (8) on the inside of the outer or on the outside of the intermediate or inner inliner respectively.

4. Method for relining of conveyor ducts like pipelines (1) with an inner inliner (2) and an outer inliner (preliner 7)
- wherein, after insertion in the outer inliner, the inner inliner (2) forms an inherently rigid inner tube (38) and
- wherein the outer inliner (preliner 7) is so arranged with a clearance from the inner inliner (2) that an open flow cross-section is formed between the inner and the outer inliner as control chamber (9) for detecting and possibly eliminating leaks in one of the inliners.

5. Method according to claim 4, **characterised in that** the inner inliner (2) consists of thermoplastic plastics and is softened by heating before or after the insertion in the outer inliner (preliner 7).

6. Method for relining conveyor ducts such as pipelines (1) with an inner inliner (2), an intermediate inliner (3) and an outer inliner (preliner 7),
- wherein the inner inliner (2) forms together with the intermediate inliner (3), after insertion in the outer inliner (preliner 7), an inherently rigid inner tube (39) and
- wherein the outer inliner (preliner 7) is arranged with a clearance from the intermediate inliner (3) so that an open flow cross-section between the intermediate and outer inliners is formed as control chamber (9) for detecting and possibly eliminating leaks in one of the inliners.

7. Method according to claim 5, **characterised in that** there is used as the inner inliner (2) a tube which has on its subsequent outside a fleece provided with a hardenable resin which is hardened after insertion inside the intermediate inliner (3).

8. Method according to claim 6, **characterised in that** the inner inliner (2) has on its outside means (knobs 4) for fixing a distance between the intermediate and inner inliners, whereby a free annular chamber (5) is formed between and the intermediate and inner inliners and that a hardenable medium (mortar 6) is introduced between the intermediate and the inner inliners and is hardened.

9. Method according to one of claims 4 to 8, **characterised in that** one of the inliners used has a metal foil (10) as diffusion or permeation barrier for chlorinated hydrocarbons.

10. Method according to one of claims 4 to 9, **characterised in that** the inliners used are inserted one after another into the pipeline to be restored through shaft construction (14) which is provided.

## Revendications

1. Système pour le chemisage de canalisations, telles que des canalisations (1) d'assainissement, avec une gaine (2) intérieure et une gaine extérieure (pré-gaine 7),
- la gaine (2) intérieure formant après sa mise en place dans la gaine extérieure (pré-gaine 7) un tube (38) intérieur doté d'une rigidité propre et
- la gaine extérieure (pré-gaine 7) étant disposée à distance de la gaine intérieure (2) de manière à former entre les gaines intérieure et extérieure un espace libre d'écoulement en tant que chambre de contrôle (9) pour détecter et le cas échéant éliminer des fuites dans l'une des gaines intérieures

2. Système pour le chemisage de canalisations, telles que des canalisations (1) d'assainissement, avec une gaine (2) intérieure, une gaine (3) intermédiaire et une gaine extérieure (pré-gaine 7),
- la gaine (2) intérieure et la gaine (3) intermédiaire formant après leur mise en place dans la gaine extérieure un tube (38) intérieur doté d'une rigidité propre et
- la gaine extérieure (pré-gaine 7) étant disposée à distance de la gaine (3) intermédiaire de manière à former entre les gaines intermédiaire et extérieure un espace libre d'écoulement en tant que chambre de contrôle (9) pour détecter et le cas échéant éliminer des fuites dans l'une des gaines intérieures.

3. Système selon l'une des revendications 1 ou 2, caractérisé par le fait que la distance entre la gaine extérieure (pré-gaine 7) et la gaine intermédiaire ou intérieure est fixée par des boutons (8) prévu sur la face intérieure de la gaine extérieure ou sur la face extérieure de la gaine intermédiaire ou de la gaine intérieure.

4. Procédé pour le chemisage de canalisations, telles que des canalisations d'assainissement (1), avec une gaine (2) intérieure et une gaine extérieure (pré-gaine 7),
- la gaine (2) intérieure formant après sa mise en place dans la gaine extérieure (pré-gaine 7) un tube (38) intérieur doté d'une rigidité propre et
- la gaine extérieure (pré-gaine 7) étant disposée à distance de la gaine intérieure (2) de manière à former entre les gaines intérieure et extérieure un espace libre d'écoulement, en tant que chambre de contrôle (9) pour détecter et le cas échéant éliminer des fuites dans l'une des gaines intérieures.

5. Procédé selon la revendication 4, caractérisé par le fait que la gaine (2) intérieure est en un matériau thermodurcissable et est ramollie par chauffage avant ou après sa mise en place dans la gaine extérieure (pré-gaine 7).

6. Procédé pour le chemisage de canalisations telles que des canalisations d'assainissement (1) avec une gaine (2) intérieure, une gaine (3) intermédiaire et une gaine extérieure (pré-gaine 7),
- la gaine (2) intérieure et la gaine (3) intermédiaire formant après leur mise en place dans la gaine extérieure (pré-gaine 7) un tube (39) intérieur doté d'une rigidité propre et
- la gaine extérieure (pré-gaine 7) étant disposée à distance de la gaine (3) intermédiaire de manière à former entre les gaines intermédiaire et extérieure un espace libre d'écoulement, en tant que chambre de contrôle (9) pour détecter et le cas échéant éliminer des fuites dans l'une des gaines intérieures.

7. Procédé selon la revendication 5, caractérisé par le fait que l'on utilise comme gaine (2) intérieure un tuyau souple qui, sur sa face qui sera située à l'extérieur, est pourvu d'un feutre imprégné d'une résine durcissable qui est durcie après mise en place dans la gaine (3) intermédiaire.

8. Procédé selon la revendication 6, caractérisé par le fait que la gaine (2) intérieure est pourvue sur sa face extérieure de moyens (boutons 4) pour fixer la distance entre la gaine intérieure et la gaine intermédiaire, un espace libre (5) annulaire étant formé entre la gaine intérieure et la gaine intermédiaire, et par le fait qu'une substance durcissable (mortier 6) est introduite et durcie dans l'espace (5) annulaire entre la gaine intérieure et la gaine intermédiaire.

9. Procédé selon l'une des revendications 4 à 8, caractérisé par le fait que l'une des gaines utilisées comporte une feuille métallique (10) en tant que barrière de diffusion et de perméation pour les hydrocarbures chlorés.

10. Procédé selon l'une des revendications 4 à 9, caractérisé par le fait que les gaines utilisées sont tractées l'une après l'autre dans la canalisation à assainir, par des regards (14) existants.
